(19) Europäisches Patentamt / European Patent Office / Office européen des brevets

(11) **EP 4 664 543 A2**

(12) # EUROPEAN PATENT APPLICATION

(43) Date of publication:
**17.12.2025 Bulletin 2025/51**

(21) Application number: **25170667.7**

(22) Date of filing: **15.04.2025**

(51) International Patent Classification (IPC):
$H01M\ 4/131^{(2010.01)}$   $H01M\ 4/36^{(2006.01)}$
$H01M\ 4/485^{(2010.01)}$   $H01M\ 4/505^{(2010.01)}$
$H01M\ 4/525^{(2010.01)}$   $C01G\ 53/42^{(2025.01)}$
$H01M\ 4/02^{(2006.01)}$

(52) Cooperative Patent Classification (CPC):
**H01M 4/364; C01G 53/42; H01M 4/131;**
**H01M 4/485; H01M 4/505; H01M 4/525;**
H01M 2004/026

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.05.2024 JP 2024082605**

(71) Applicant: **Prime Planet Energy & Solutions, Inc.**
**Chuo-ku, Tokyo 103-0022 (JP)**

(72) Inventor: **HIGUCHI, Takatoshi**
**Tokyo 103-0022 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **POSITIVE ELECTRODE ACTIVE MATERIAL AND NON-AQUEOUS ELECTROLYTE SECONDARY BATTERY**

(57) A positive electrode active material comprises a first active material and a second active material having an average particle size (D50) smaller than an average particle size (D50) of the first active material. The first active material is a lithium-(transition metal) composite oxide containing Ni at 75 mol% or more and Ti at 0.5 to 2.8 mol% relative to a total number of moles of metallic element except Li. The second active material is a lithium-(transition metal) composite oxide containing Ni at 75 mol% or more relative to a total number of moles of metallic element except Li. A content of Ti in the second active material is 0.1 mol% or less relative to the total number of moles of metallic element except Li. Ni disorder of the first active material is from 2.1 to 2.6%, and Ni disorder of the second active material is 2.0% or less.

**EP 4 664 543 A2**

**Description**

CROSS REFERENCE TO RELATED APPLICATIONS

This nonprovisional application is based on Japanese Patent Application No. 2024-082605 filed on May 21, 2024, with the Japan Patent Office, the entire contents of which are hereby incorporated by reference.

BACKGROUND OF THE INVENTION

Field of the Invention

The present invention relates to a positive electrode active material and a non-aqueous electrolyte secondary battery.

Description of the Background Art

It is known to increase the capacity of a battery by using, as a positive electrode active material, two types of Ni-containing lithium composite oxides with high Ni contents that are different in average particle size. For example, International Patent Laying-Open No. WO 2020/003642 discloses regulating Ni disorder of a Ni-containing lithium composite oxide for achieving good output properties and endurance.

SUMMARY OF THE INVENTION

However, even when Ni disorder of the Ni-containing lithium composite oxide is regulated, thermal stability of the secondary battery can be degraded.

The present disclosure aims at providing a positive electrode active material capable of producing a non-aqueous electrolyte secondary battery with high capacity and excellent thermal stability, as well as a non-aqueous electrolyte secondary battery comprising the same.

[1] A positive electrode active material comprising:

a first active material; and
a second active material having an average particle size (D50) smaller than an average particle size (D50) of the first active material, wherein
the first active material is secondary particles each consisting of 50 or more primary particles aggregated together,
the second active material is at least one of single particles and secondary particles, the secondary particles each consist of 2 to 10 primary particles aggregated together,
the first active material is a lithium-(transition metal) composite oxide containing Ni at 75 mol% or more and Ti at 0.5 to 2.8 mol% relative to a total number of moles of metallic element except Li,
the second active material is a lithium-(transition metal) composite oxide containing Ni at 75 mol% or more relative to a total number of moles of metallic element except Li,
a content of Ti in the second active material is 0.1 mol% or less relative to the total number of moles of metallic element except Li,
Ni disorder of the first active material is from 2.1 to 2.6%, and
Ni disorder of the second active material is 2.0% or less.

[2] The positive electrode active material according to [1], wherein a content of Ti in the first active material is from 1 to 2.5 mol% relative to the total number of moles of metallic element except Li.

[3] The positive electrode active material according to [1] or [2], wherein a mass ratio between the first active material and the second active material is (first active material):(second active material)=7:3 to 5:5.

[4] The positive electrode active material according to any one of [1] to [3], wherein the average particle size (D50) of the first active material is from 12 to 20 $\mu$m.

[5] The positive electrode active material according to any one of [1] to [4], wherein the average particle size (D50) of the second active material is from 2 to 6 $\mu$m.

[6] The positive electrode active material according to any one of [1] to [5], wherein particle size distribution of the first active material is {(average particle size (D90))-(average particle size (D10))}/(average particle size (D50))=0.2 to 0.8.

[7] The positive electrode active material according to any one of [1] to [6], wherein particle size distribution of the second active material is {(average particle size (D90))-(average particle size (D10))}/(average particle size (D50)) =0.7 to 1.5.

[8] The positive electrode active material according to any one of [1] to [7], wherein a content of Co in the first active material relative to the total number of moles of metallic element except Li is less than a content of Co in the second active material relative to the total number of moles of metallic element except Li.

[9] A non-aqueous electrolyte secondary battery comprising a positive electrode plate, wherein the positive electrode plate has an active material layer including the positive electrode active material according to any one of [1] to [8].

The foregoing and other objects, features, aspects and advantages of the present invention will become more apparent from the following detailed description of the present invention.

DESCRIPTION OF THE PREFERRED EMBODIMENTS

Herein, a numerical range such as "from x to y" includes the upper limit and the lower limit, unless otherwise specified. That is, "from x to y" means a numerical range of "not less than x and not more than y". Any numerical value selected from a certain numerical range may be used as a new upper limit or a new lower limit. For example, any numerical value from a certain numerical range may be combined with any numerical value described in another location of the present specification or in a table to set a new numerical range.

(Positive Electrode Active Material)

A positive electrode active material according to the present embodiment (hereinafter also called "the present positive electrode active material") is usable in a positive electrode plate of a non-aqueous electrolyte secondary battery (hereinafter also called "a secondary battery") such as a lithium-ion battery.

The present positive electrode active material comprises a first active material and a second active material. The average particle size (D50) of the second active material is smaller than the average particle size (D50) of the first active material. The first active material is secondary particles each consisting of 50 or more primary particles aggregated together (hereinafter also called "first secondary particles"). The second active material is at least one of single particles and secondary particles (hereinafter also called "second secondary particles"), and the secondary particles each consist of 2 to 10 primary particles aggregated together.

The first active material is a lithium-(transition metal) composite oxide containing Ni at 75 mol% or more and Ti at 0.5 to 2.8 mol% relative to a total number of moles of metallic element except Li. The second active material is a lithium-(transition metal) composite oxide containing Ni at 75 mol% or more relative to a total number of moles of metallic element except Li. A content of Ti in the second active material is 0.1 mol% or less relative to the total number of moles of metallic element except Li. Ni disorder of the first active material is from 2.1 to 2.6%. Ni disorder of the second active material is 2.0% or less.

When a positive electrode active material that includes a first active material and a second active material each having the content of Ni within the above-mentioned range and being different from each other in both the average particle size (D50) and the form of particle aggregation is used, capacity of the secondary battery tends to increase, but thermal stability of the secondary battery may be impaired. Since the present positive electrode active material comprises the first active material containing Ti in the above-mentioned content and having Ni disorder within the above-mentioned range, it can enhance thermal stability of the secondary battery. However, when thermal stability of a secondary battery is enhanced by the use of the first active material, capacity of the secondary battery may be degraded. In the case of the present positive electrode active material, the second active material contains no Ti or only a trace amount of Ti and Ni disorder is within the above-mentioned range, so the capacity of the secondary battery can also be increased. By using the present positive electrode active material, it is possible to obtain a secondary battery with high capacity and good thermal stability.

The first active material is first secondary particles each consisting of 50 or more primary particles aggregated together. The number of primary particles aggregated together to form each first secondary particle may be 100 or more, or may be 1000 or more; and usually, it is $5 \times 10^6$ or less, and it may be $5 \times 10^5$ or less. Herein, the number of primary particles aggregated together can be determined in an SEM image captured with a scanning electron microscope (hereinafter also called "SEM"), for example.

The first active material is a lithium-(transition metal) composite oxide (hereinafter also called "a first composite oxide") that contains Ni at 75 mol% or more and Ti at 0.5 to 2.8 mol% relative to the total number of moles of metallic element except Li. The content of Ni in the first composite oxide, relative to the total number of moles of metallic element except Li, is preferably 80 mol% or more, and it may be 82 mol% or more, or may be from 75 to 96 mol%, or may be from 80 to 93 mol%, or may be from 82 to 90 mol%. The content of Ti in the first composite oxide relative to the total number of moles of metallic element except Li may be from 0.8 to 2.8 mol%; and preferably, it is from 1.0 to 2.5 mol%, and it may be from 1.3 to 2.2 mol%. Preferably, Ti contained in the first active material forms solid solution with the whole first active material. The combination of the range of the content of Ni in the first composite oxide and the range of the content of Ti in the first composite oxide can be freely selected from the above-mentioned ranges.

Ni disorder of the first active material is from 2.1 to 2.6%, and it may be from 2.2 to 2.6%, or may be from 2.3 to 2.6%, or may be from 2.1 to 2.5%. Ni disorder of the first active material indicates the rate of mixing of element Ni at lithium sites in the crystal structure of the first active material (the cation-mixing amount). The range of Ni disorder of the first active material can be freely selected in relation to the above-mentioned range of the content of Ni and/or Ti in the first composite oxide, namely, the first active material. When the content of Ti and the Ni disorder in the first active material fall within the above-mentioned ranges, the secondary battery can have enhanced thermal stability.

Preferably, the first active material, namely, the first composite oxide contains Co. Preferably, the content [mol%] of Co in the first active material relative to the total number of moles of metallic element except Li is less than the content [mol%] of Co in the second active material relative to the total number of moles of metallic element except Li described below. In this case, a secondary battery with high capacity and excellent thermal stability tends to be obtained. For example, the content of Co in the first active material relative to the total number of moles of metallic element except Li may be from 2 to 15 mol%, or may be from 2 to 10 mol%, or may be from 3 to 7 mol%.

The first composite oxide can have a structure represented by a formula (I), for example.

$$Li_{x1}(Ni_{(1-y1-z1)}Co_{y1}Me1_{z1})O_2 \qquad (I)$$

[In the formula (I),

$0.8 \leq x1 \leq 1.3$, $0.02 \leq y1 \leq 0.15$, and $0.01 \leq z1 \leq 0.18$, and
Me1 includes Ti, and may include one or more types selected from the group consisting of Mn, Al, Mg, Mo, Nb, W, B, and Zr.]

In the formula (I), x1 may be $1.0 \leq x1 \leq 1.2$, or may be $1.0 \leq x1 \leq 1.1$, or may be $1.01 \leq x1 \leq 1.08$. In the formula (I), y may be $0.02 \leq y1 \leq 0.12$, or may be $0.03 \leq y1 \leq 0.10$, or may be $0.04 \leq y1 \leq 0.08$. In the formula (I), z1 may be $0.01 \leq z1 \leq 0.15$, or may be $0.02 \leq z1 \leq 0.12$, or may be $0.03 \leq z1 \leq 0.10$. In the formula (I), Me1 preferably includes Ti as well as one or more types selected from the group consisting of Mn and Al, and more preferably, it includes Ti and Mn. The combination of the ranges of x1, y1, z1, and M1 can be freely selected from the above-mentioned ranges.

The second active material is at least one of single particles and second secondary particles each consisting of 2 to 10 primary particles aggregated together. The second active material may be single particles, or may be second secondary particles, or may be a mixture of single particles and second secondary particles. The number of primary particles aggregated together to form each second secondary particle may be from 2 to 8, or may be from 2 to 5, or may be from 3 to 5.

The second active material is a lithium-(transition metal) composite oxide (hereinafter also called "a second composite oxide") that contains Ni at 75 mol% or more relative to the total number of moles of metallic element except Li. The second composite oxide may or may not contain Ti. The content of Ni in the second composite oxide relative to the total number of moles of metallic element except Li is preferably 80 mol% or more, and it may be 82 mol% or more, or may be from 75 to 96 mol%, or may be from 80 to 93 mol%, or may be from 82 to 90 mol%. The content of Ti in the second composite oxide relative to the total number of moles of metallic element except Li is 0.10 mol% or less, and it may be 0.05 mol% or less, or may be 0.01 mol% or less. When the second active material contains Ti, this Ti may form solid solution with the whole second active material. The combination of the range of the content of Ni in the second composite oxide and the range of the content of Ti in the second composite oxide can be freely selected from the above-mentioned ranges.

Ni disorder of the second active material is 2.0% or less, and it may be from 0.1 to 2.0%, or may be from 0.5 to 1.8%, or may be from 0.8 to 1.7%. Ni disorder of the second active material indicates the rate of mixing of element Ni at lithium sites in the crystal structure of the second active material (the cation-mixing amount). The range of Ni disorder of the second active material can be freely selected in relation to the above-mentioned range of the content of Ni and/or Ti in the second composite oxide, namely, the second active material. When the content of Ti and the Ni disorder in the second active material fall within the above-mentioned ranges, the secondary battery can have high capacity.

Preferably, the second active material, namely, the second composite oxide contains Co. Preferably, the content [mol%] of Co in the second active material relative to the total number of moles of metallic element except Li is more than the content [mol%] of Co in the first active material relative to the total number of moles of metallic element except Li. In this case, a secondary battery with high capacity and excellent thermal stability tends to be obtained. For example, the content of Co in the second active material relative to the total number of moles of metallic element except Li may be from 2 to 20 mol%, or may be from 5 to 18 mol%, or may be from 8 to 15 mol%.

The second composite oxide can have a structure represented by a formula (II), for example.

$$Li_{x2}(Ni_{(1-y2-z2)}Co_{y2}Me2_{z2})O_2 \qquad (II)$$

[In the formula (II),

0.8≤x2≤1.2, 0.02≤y2≤0.2, and 0.001≤z2≤0.15, and
Me2 may include one or more types selected from the group consisting of Ti, Mn, Al, Mg, Mo, Nb, W, B, and Zr.]

In the formula (II), x2 may be 1.0≤x2≤1.1, or may be 1.01≤x2≤1.08. In the formula (II), y2 may be 0.02≤y2≤0.20, or may be 0.02≤y2≤0.12, or may be 0.03≤y2≤0.10, or may be 0.04≤y2≤0.08. In the formula (II), z2 may be 0.005≤z2≤0.12, or may be 0.01≤z2≤0.1, or may be 0.02≤z2≤0.08. In the formula (II), Me2 preferably includes one or more types selected from the group consisting of Mn and Al, and more preferably, it includes Mn. The combination of the ranges of x2, y2, z2, and M2 can be freely selected from the above-mentioned ranges.

The contents of Ni and Ti in the first composite oxide and the second composite oxide can be regulated by changing the amounts of Ni and Ti, respectively, contained in the raw material (the Ni source and the Ti source) that is used in the production. The composition of the first composite oxide and the second composite oxide can be determined by high-frequency inductively coupled plasma (ICP) emission spectroscopy of the solution thereof in nitric acid and/or the like.

Ni disorder of the first active material and the second active material can be regulated by changing the content of Ti in the first active material and the second active material, the calcination conditions adopted at the time of production of the first composite oxide and the second composite oxide such as the calcination temperature, the number of calcination operations to perform, and the calcination time, and the like. Ni disorder of the first active material and the second active material can be determined by Rietveld analysis of the measurement data obtained by X-ray diffraction.

The number of primary particles aggregated together to form each first secondary particle constituting the first active material, and the number of primary particles aggregated together to form each second secondary particle constituting the second active material can be regulated by changing the calcination conditions and the like adopted at the time of production of the first composite oxide and the second composite oxide, respectively.

The average particle size (D50) of the first active material is preferably from 12 to 20 μm, and it may be from 14 to 18 μm, or may be from 15 to 17 μm. The particle size distribution of the first active material is preferably from 0.2 to 0.8, and it may be from 0.2 to 0.6, or may be from 0.3 to 0.5. Herein, the particle size distribution is calculated by the following equation.

Particle size distribution={(Average particle size (D90))-(Average particle size (D10))}/(Average particle size (D50))

Herein, each of the average particle size (D10), the average particle size (D50), and the average particle size (D90) is a particle size in volume-based particle size distribution at which cumulative frequency of particle sizes accumulated from the small size side reaches 10%, 50%, and 90%, respectively. The volume-based particle size distribution can be measured with a laser-diffraction particle size distribution analyzer.

The average primary particle size of the first secondary particles constituting the first active material is preferably from 0.5 to 1.5 μm, and it may be from 0.7 to 1.2 μm. The average primary particle size of the first secondary particles is calculated as the average value of the distance between two points located farthest apart from each other on the outline of each one of 10 or more primary particles randomly selected in an SEM image of particle surfaces of the first active material.

The average particle size (D50) of the second active material is preferably from 2 to 6 μm, and it may be from 2.5 to 5.0 μm, or may be from 3.0 to 4.5 μm. The particle size distribution of the second active material is preferably from 0.7 to 1.5, and it may be from 1.0 to 1.4, or may be from 1.1 to 1.3.

The average particle size value (hereinafter also called "the particle size average") that is obtainable by averaging the particle sizes of the single particles of the second active material and the primary particles constituting the second secondary particles of the second active material is preferably from 1 to 3 μm, and it may be from 1 to 2 μm. The particle size average of the second active material is calculated as the average value of the distance between two points located farthest apart from each other on the outline of each one of a combined total of 10 or more single particles and primary particles randomly selected in an SEM image of particle surfaces of the second active material.

When the average particle size (D50) and the particle distribution of the first active material and the second active material fall within the above-mentioned ranges, an active material layer (described below) formed by using the present positive electrode active material tends to be dense and the secondary battery tends to have high capacity. The combination of the ranges of the average particle size and the particle size distribution of the first active material and the second active material can be freely selected from the above-mentioned ranges.

The combination of the ranges of various physical properties of the first active material and the second active material described above, such as the form of aggregation, the contents of elements such as Ti, Ni, and Co, the Ni disorder, the average particle size (D50), the particle size distribution, the average primary particle size, and the particle size average, can be freely selected from the above-mentioned ranges.

The first active material can be obtained by, for example, mixing together a Ni-containing compound that contains Ni, a lithium compound, and a Ti-containing compound that contains Ti, and calcining the resultant. The Ni-containing compound may contain a non-Ni metallic element such as Co and Mn. The Ni-containing compound may be either a hydroxide or an oxide. Examples of the Ni-containing compound include NiCoMn composite hydroxides. Examples of the lithium compound include lithium hydroxide, lithium carbonate, and the like. Examples of the Ti-containing compound include titanium oxide and the like.

The second active material can be obtained by, for example, mixing together a Ni-containing compound that contains Ni and a lithium compound, and calcining the resultant. Examples of the Ni-containing compound and the lithium compound include those mentioned above.

The mass ratio between the first active material and the second active material in the present positive electrode active material, namely, (first active material):(second active material) is preferably from 7:3 to 5:5, and it may be from 6.5:3.5 to 5.5:4.5. When the mass ratio falls within the above-mentioned range, an active material layer (described below) formed by using the present positive electrode active material tends to be dense and the secondary battery tends to have high capacity.

The present positive electrode active material may include only the first active material and the second active material, or may further include another active material in addition to the first active material and the second active material. The total content of the first active material and the second active material in the present positive electrode active material relative to the total amount of the present positive electrode active material may be from 85 to 100 mass%, or may be from 90 to 100 mass%, or may be from 92 to 99 mass%, or may be from 95 to 98 mass%.

(Non-Aqueous Electrolyte Secondary Battery)

A non-aqueous electrolyte secondary battery according to the present embodiment (hereinafter also called "the present battery") has a positive electrode plate that has an active material layer (hereinafter also called "a positive electrode active material layer") comprising the present positive electrode active material. Since it has the positive electrode plate having the positive electrode active material layer, the present battery can have high capacity and good thermal stability.

The present battery can comprise an electrode assembly that includes the positive electrode plate, as well as a non-aqueous electrolyte solution, and it may comprise a battery case for accommodating the electrode assembly and the non-aqueous electrolyte solution. The battery case may include an exterior package having an opening, and a sealing plate for sealing the opening. Each of the exterior package and the sealing plate is preferably made of metal, and can be formed by using aluminum, aluminum alloy, iron, iron alloy, or the like. Between the electrode assembly and the exterior package, a resin sheet may be provided as an electrode holder. Alternatively, the battery case may be made of a laminated film. The laminated film has a multilayer structure formed of a metal layer and a resin layer stacked on top of one another, for example. The edges of the laminated film can be fused together to form a pouch-shaped battery case.

The electrode assembly may include a negative electrode plate and a separator, in addition to the positive electrode plate. In the electrode assembly, the positive electrode active material layer of the positive electrode plate faces a negative electrode active material layer of the negative electrode plate, with the separator interposed therebetween. The electrode assembly may be a stack-type one that is formed by stacking the positive electrode plate, the negative electrode plate, and the separator, or may be a wound-type one that is formed by stacking the positive electrode plate, the negative electrode plate, and the separator and winding the resulting long stack. After the long stack is wound, the wound-type electrode assembly may be pressed into a flat shape.

The positive electrode plate can have the positive electrode active material layer on one side or both sides of a positive electrode current-collecting foil sheet. The positive electrode current-collecting foil sheet is a metal foil sheet that is formed with an aluminum material such as aluminum and aluminum alloy, for example. The positive electrode active material layer can further include at least one of a conductive aid and a binder, in addition to the present positive electrode active material.

Examples of the binder include fluororesins such as polyvinylidene difluoride (PVdF) and polytetrafluoroethylene (PTFE); polyacrylonitrile (PAN); polyimide; acrylic resins; polyolefin; cellulose-based resins such as carboxymethylcellulose (CMC), methylcellulose (MC), and hydroxypropylcellulose; polyethylene oxide (POE); and the like. The binder can include one, two, or more types of the above-mentioned binders.

Examples of the conductive aid include a carbon material. The carbon material may be one or more types selected from the group consisting of fibrous carbon, carbon black (such as acetylene black, Ketjenblack), coke, and activated carbon, for example. Examples of the fibrous carbon include carbon nanotubes (CNTs). The CNTs may be single-walled carbon nanotubes (SWCNTs), or may be multi-walled carbon nanotubes such as double-walled carbon nanotubes (DWCNTs). The conductive aid can include one, two, or more types of the above-mentioned conductive aids.

The positive electrode plate can be obtained by, for example, forming the positive electrode active material layer on the positive electrode current-collecting foil sheet. For example, a positive electrode composite material slurry including the present positive electrode active material is applied to the positive electrode current-collecting foil sheet, and dried and compressed to form the positive electrode active material layer, and thus the positive electrode plate is obtained. The positive electrode composite material slurry can include a binder, a conductive aid, and a solvent such as N-methyl-2-pyrrolidone (NMP), in addition to the present positive electrode active material.

The negative electrode plate usually has a negative electrode current-collecting foil sheet and a negative electrode active material layer. The negative electrode plate can have the negative electrode active material layer on one side or both sides of the negative electrode current-collecting foil sheet. The negative electrode current-collecting foil sheet is a metal foil sheet that is formed by using a copper material such as copper and copper alloy, for example. The negative electrode active material layer includes a negative electrode active material, and may further include a conductive aid, a binder, and the like.

Examples of the negative electrode active material include carbon-based active material particles, metal-based active material particles, and the like. Examples of the carbon-based active material particles include particles of one or more types of carbon materials selected from the group consisting of graphite such as natural graphite and artificial graphite, hard carbon, soft carbon, and amorphous-coated graphite. Examples of the metal-based active material particles include particles of, for example, an elemental metal or a metal oxide including an element selected from the group consisting of silicon (Si), tin (Sn), antimony (Sb), bismuth (Bi), titanium (Ti), and germanium (Ge). Examples of the metal-based active material particles include particles of one or more types selected from the group consisting of Si, SiOx (x=0.5 to 1.5), a Si-C composite (hereinafter also called "a SiC composite"), and Sn.

Examples of the binder include cellulose-based resins such as carboxymethylcellulose (CMC), methylcellulose (MC), and hydroxypropylcellulose; polyacrylic acid; styrene-butadiene rubber (SBR); and the like. The binder can include one, two, or more types among these. Examples of the conductive aid include those mentioned above, and the conductive aid can include one, two, or more types of the above-mentioned conductive aids.

The negative electrode plate can be obtained by, for example, forming the negative electrode active material layer on the negative electrode current-collecting foil sheet. For example, a negative electrode composite material slurry including the negative electrode active material is applied to the negative electrode current-collecting foil sheet, and dried and compressed to form a negative electrode active material layer, and thereby the negative electrode plate is obtained. The negative electrode composite material slurry can include a conductive aid, a binder, and a solvent such as water, in addition to the negative electrode active material.

The separator has a base material, and it may have a functional layer on at least one side of the base material. The base material can be a porous sheet such as a film or a nonwoven fabric, which is made of a resin such as polyolefin (such as polyethylene and polypropylene), polyester, cellulose, polyamide, and/or the like. The base material may have a monolayer structure, or may have a multilayer structure. Examples of the functional layer include an adhesive layer and a heat-resistant layer, and the functional layer can be either one of them, or both. The adhesive layer can be formed with an adhesive agent, for example. The heat-resistant layer can include a filler and a binder, for example.

The non-aqueous electrolyte solution is preferably obtained by adding an electrolyte to a non-aqueous solvent such as an organic solvent. Examples of the electrolyte include $LiPF_6$, $LiBF_4$, $LiClO_4$, $LiFSO_3$, LiBOB (lithium bis(oxalato) borate), and the like. The non-aqueous electrolyte solution may include one, two, or more electrolytes among these. Examples of the non-aqueous solvent include ethylene carbonate (EC), ethyl methyl carbonate (EMC), dimethyl carbonate (DMC), propylene carbonate (PC), butylene carbonate (BC), diethyl carbonate (DEC), and the like. The non-aqueous electrolyte solution can include one, two, or more non-aqueous solvents among these. The non-aqueous electrolyte solution may further include an additive such as vinylene carbonate (VC), vinylethylene carbonate (VEC), and fluoroethylene carbonate.

[Examples]

In the following, the present disclosure will be described in further detail by way of Examples and Comparative Examples.

[Examples 1 to 4, Comparative Examples 1 to 4]

(Preparation of Positive Electrode Active Material)

A NiCoMn composite hydroxide, a lithium compound, and titanium oxide were mixed together, followed by calcination at a temperature within the range of 700 to 900°C, and thereby a first active material was obtained. The first active material is secondary particles each consisting of 50 or more primary particles aggregated together. The first active material was dissolved in nitric acid, and subjected to high-frequency inductively coupled plasma (ICP) emission spectroscopy to determine the composition of the first active material; the first active material contained Ni at 83 mol% and Ti in the content specified in Table 1, relative to the total number of moles of metallic element except Li.

A NiCoMn composite hydroxide and a lithium compound were mixed together, followed by calcination at a temperature within the range of 800 to 900°C, and thereby a second active material was obtained. The second active material is at least one of single particles and secondary particles each consisting of 2 to 10 primary particles aggregated together. The second active material was dissolved in nitric acid, and subjected to ICP emission spectroscopy to determine the composition of the second active material, the second active material contained Ni at 83 mol% relative to the total number of moles of metallic element except Li. The content of Ti in the second active material was 0.1 mol% or less.

(Preparation of Positive Electrode Plate)

The first active material, the second active material, carbon black as a conductive aid, and polyvinylidene difluoride (PVdF) as a binder were mixed in a mass ratio of (first active material):(second active material):(conductive aid):binder=58.5:39:1.5:1.0, followed by further addition of a proper amount of N-methyl-2-pyrrolidone (NMP) to prepare a positive electrode composite material slurry. The resulting positive electrode composite material slurry was applied to an aluminum foil sheet as a positive electrode current-collecting foil sheet, followed by drying, compressing with a roller into a certain thickness, cutting into a certain size, and then attaching an aluminum tab thereto, and thereby a positive electrode plate was obtained.

(Preparation of Test Cell)

A metal lithium foil sheet as a counter electrode for the positive electrode plate as well as a separator made of polyolefin were prepared. The positive electrode plate, the separator, and the metal lithium foil sheet were stacked together, and thereby a stack-type electrode assembly was obtained. The resulting electrode assembly was inserted into an exterior package made of an aluminum laminated film, and a non-aqueous electrolyte solution was injected thereinto, followed by sealing the opening of the exterior package, and thereby a test cell was obtained. The non-aqueous electrolyte solution was prepared by mixing ethylene carbonate (EC) and ethyl methyl carbonate (EMC) in a volume ratio of EC:EMC=30:70, and, in the resulting mixed solvent, dissolving lithium hexafluorophosphate ($LiPF_6$) as an electrolyte in a concentration of 1 mol/L, followed by adding vinylene carbonate (VC) as an additive in 0.3 mass% relative to the total amount of the mixed solvent.

[Calculation of Ni Disorder of First Active Material and Second Active Material]

With a fully-automatic multipurpose X-ray diffractometer ("SmartLab" manufactured by Rigaku), with Cu used in the vacuum tube (target element) and at a tube voltage of 45 kV and a tube current of 200 mA, by a reflection method, X-ray diffraction measurement of each of the first active material and the second active material filled in a specifically-designed holder was carried out. The data obtained by the measurement was subjected to Rietveld analysis to determine Ni disorder of the first active material and the second active material. Results are given in Table 1.

[Measurement of Average Particle Size and Particle Size Distribution of First Active Material and Second Active Material]

With a particle size distribution measurement apparatus ("Mastersizer-3000" manufactured by Malvern Panalvtical), the average particle size (D10), the average particle size (D50), and the average particle size (D90) of the first active material and the second active material were measured. By the following equation, the particle size distribution was calculated. Results are given in Table 1.

Particle size distribution = {(Average particle size (D90)) - (Average particle size (D10))}/(Average particle size (D50))

[Evaluation of Thermal Stability]

The test cell was subjected to constant-current charging at a current density of 0.2 mA/cm$^2$ until 4.3 V vs. Li/Li$^+$ was reached, and it was then subjected to constant-voltage charging at 4.3 V vs. Li/Li$^+$ until the current density reached 0.04 mA/cm$^2$, followed by sampling the positive electrode composite material from the positive electrode active material layer of the positive electrode plate. With a differential thermogravimetric analyzer ("DTG-60A" manufactured by Shimadzu), the temperature of the positive electrode composite material was raised at 5°C/min to reach 300°C, and the smallest value of the DTG curve (which was the differential curve of the resulting TG curve) was determined. Results are given in Table 1. The smallest value of the DTG curve represents the weight decrease rate of the positive electrode composite material, and the higher the value, the better the thermal stability.

[Evaluation of Discharged Capacity]

Under conditions at a temperature of 25°C, the test cell was subjected to constant-current charging at a current density of 0.2 mA/cm$^2$ until 4.3 V vs. Li/Li$^+$ was reached, and it was then subjected to constant-voltage charging at 4.3 V vs. Li/Li$^+$ until the current density reached 0.04 mA/cm$^2$. This test cell was subjected to constant-current discharging at a current density of 0.04 mA/cm$^2$ until 3.0 V vs. Li/Li$^+$ was reached, and the discharged capacity was measured. Results are given in Table 1.

[Table 1]

| | Comp. Ex. 1 | Comp. Ex. 2 | Ex. 1 | Ex. 2 | Ex. 3 | Ex. 4 | Comp. Ex. 3 | Comp. Ex. 4 |
|---|---|---|---|---|---|---|---|---|
| First active material | | | | | | | | |
| Ti content [mol%][*1] | 0 | 1 | 1 | 2 | 2 | 2.5 | 3 | 2 |
| Ni disorder [%] | 1.8 | 2.0 | 2.6 | 2.1 | 2.3 | 2.6 | 2.7 | 2.1 |
| D50[μm] | 16.5 | 16.8 | 16.2 | 16.0 | 16.1 | 16.8 | 16.5 | 16.0 |
| Particle size distribution | 0.4 | 0.4 | 0.6 | 0.6 | 0.5 | 0.5 | 0.5 | 0.6 |
| Second active material | | | | | | | | |
| Ti content [mol%][*1] | ≤0.1 | ≤0.1 | ≤0.1 | ≤0.1 | ≤0.1 | ≤0.1 | ≤0.1 | ≤1 |
| Ni disorder [%] | 1.5 | 1.5 | 1.5 | 1.5 | 1.5 | 1.5 | 1.5 | 2.1 3.8 |
| D50 [μm] | 3.8 | 3.8 | 3.8 | 3.8 | 3.8 | 3.8 | 3.8 | |
| Particle size distribution | 1.3 | 1.3 | 1.3 | 1.3 | 1.3 | 1.3 | 1.3 | 1.2 |
| Evaluation [%/min][*2] | | | | | | | -0.26 | |
| DTG | -0.88 | -0.71 | -0.37 | -0.53 | -0.45 | -0.37 | | -0.51 |
| Discharged capacity [mAh/g] | 211.4 | 208.4 | 206.5 | 205.3 | 204.1 | 203.2 | 201.3 | 202.1 |

*1: Ratio relative to the total number of moles of metallic element except Li
*2: Smallest value of DTG curve

Although the embodiments of the present invention have been described, the embodiments disclosed herein are illustrative and non-restrictive in any respect. The scope of the present invention is defined by the terms of the claims, and is intended to encompass any modifications within the meaning and the scope equivalent to the terms of the claims.

**Claims**

1.   A positive electrode active material comprising:

a first active material; and
a second active material having an average particle size (D50) smaller than an average particle size (D50) of the first active material, wherein
the first active material is secondary particles each consisting of 50 or more primary particles aggregated together,
the second active material is at least one of single particles and secondary particles, the secondary particles each consist of 2 to 10 primary particles aggregated together,
the first active material is a lithium-(transition metal) composite oxide containing Ni at 75 mol% or more and Ti at 0.5 to 2.8 mol% relative to a total number of moles of metallic element except Li,
the second active material is a lithium-(transition metal) composite oxide containing Ni at 75 mol% or more relative to a total number of moles of metallic element except Li,
a content of Ti in the second active material is 0.1 mol% or less relative to the total number of moles of metallic element except Li,
Ni disorder of the first active material is from 2.1 to 2.6%, and
Ni disorder of the second active material is 2.0% or less.

2. The positive electrode active material according to claim 1, wherein a content of Ti in the first active material is from 1 to 2.5 mol% relative to the total number of moles of metallic element except Li.

3. The positive electrode active material according to claim 1 or 2, wherein a mass ratio between the first active material and the second active material is (first active material):(second active material)=7:3 to 5:5.

4. The positive electrode active material according to any one of claims 1 to 3, wherein the average particle size (D50) of the first active material is from 12 to 20 $\mu$m.

5. The positive electrode active material according to any one of claims 1 to 4, wherein the average particle size (D50) of the second active material is from 2 to 6 $\mu$m.

6. The positive electrode active material according to any one of claims 1 to 5, wherein particle size distribution of the first active material is {(average particle size (D90))-(average particle size (D10))}/(average particle size (D50))=0.2 to 0.8.

7. The positive electrode active material according to any one of claims 1 to 6, wherein particle size distribution of the second active material is {(average particle size (D90))-(average particle size (D10))}/(average particle size (D50)) =0.7 to 1.5.

8. The positive electrode active material according to any one of claims 1 to 7, wherein a content of Co in the first active material relative to the total number of moles of metallic element except Li is less than a content of Co in the second active material relative to the total number of moles of metallic element except Li.

9. A non-aqueous electrolyte secondary battery comprising a positive electrode plate, wherein the positive electrode plate has an active material layer including the positive electrode active material according to any one of claims 1 to 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024082605 A
- WO 2020003642 A